Europäisches Patentamt

European Patent Office

Office européen des brevets

(11) Veröffentlichungsnummer: **0 180 862**

**A1**

(12) **EUROPÄISCHE PATENTANMELDUNG**

(21) Anmeldenummer: 85113514.5

(22) Anmeldetag: 24.10.85

(51) Int. Cl.⁴: **B 62 J 1/26**
**B 62 J 1/00**

(30) Priorität: 26.10.84 DE 3439242

(43) Veröffentlichungstag der Anmeldung:
14.05.86 Patentblatt 86/20

(84) Benannte Vertragsstaaten:
BE FR IT NL

(71) Anmelder: Reusing, Dieter
Gmünder Strasse 6
D-7072 Heubach(DE)

(72) Erfinder: Reusing, Dieter
Gmünder Strasse 6
D-7072 Heubach(DE)

(54) Sattel, insbesondere für Zweiräder.

(57) Ein Sattel, insbesondere für Zweiräder, wie z.B. Fahrräder, Mopeds, Motorräder usw., wobei auf einer im wesentlichen ebenen Bodenplatte (1), die in ihrer Fläche länglich bis birnenförmig ausgebildet ist, eine Satteldecke (2) angeordnet ist. Die Satteldecke ist im wesentlichen halbröhrenförmig von der einen Längskante zur gegenüberliegenden Längskante über die Bodenplatte (1) gewölbt und bildet dadurch einen Zwischenraum (5) zwischen der Bodenplatte (1) und der Sateldecke (2), wobei im Zwischenraum (5) eine Gasfüllung angeordnet ist. Die Satteldecke (2) verjüngt sich entsprechend der Form der Bodenplatte (1) vom hinteren Bereich (3) zum vorderen Bereich (4) in an sich bekannter Weise und weist räumlich etwa die Form einer halben Birne auf. Die Satteldecke (2) is flexibel ausgebildet.

Croydon Printing Company Ltd.

Anmelder:

Dieter Reusing
Gmünder Straße 6
7072 Heubach

Heubach, den 23.1o.1985

A 84117

# S A T T E L , INSBESONDERE FÜR ZWEIRÄDER

Die Erfindung betrifft einen Sattel, insbesondere für
Zweiräder wie z.B. Fahrräder, Mopeds, Motorräder usw.

Herkömmliche     Sattel für Zweiräder sind relativ
unbequem und hart; sie verursachen insbesondere bei
Anfängern und Hobbyfahrern nicht selten schon nach
relativ kurzer Zeit Druck - und Scheuerstellen, so
daß der ungewohnte Fahrer rasch die Freude an dieser
naturverbundenen Fortbewegungsart verliert. Aus diesem
Grunde hat man schon versucht, gattungsgemäße Sattel
auf verschiedene Art und Weise für den Fahrer bequemer
zu gestalten. Aber bis heute sind alle Versuche fehlgeschlagen.

Es ist die Aufgabe der vorliegenden Erfindung einen
gattungsgemäßen Sattel so zu verbessern, daß die Sitzhärte des Sattels einstellbar ist, wobei der Sattel
formbeständig bleiben soll und wobei ein sicheres und
nicht "schwimmendes" Sitzen auf diesem Sattel gewährleistet ist.

0180862

Diese Aufgabe wird erfindungsgemäß dadurch gelöst, daß auf einer im wesentlichen ebenen Bodenplatte, die in ihrer Fläche länglich bis birnenförmig ausgebildet ist, eine Satteldecke angeordnet ist, wobei die Satteldecke im wesentlichen halbröhrenförmig von der einen Längskante zur gegenüberliegenden Längskante über die Bodenplatte gewölbt ist und dadurch einen Zwischenraum zwischen der Bodenplatte und der Satteldecke bildet und wobei sich die Satteldecke entsprechend der Form der Bodenplatte vom hinteren Bereich zum vorderen Bereich des Sattels in an sich bekannter Weise annähernd halbbirnenförmig verjüngt und wobei der Zwisschenraum eine Gasfüllung aufweist und wobei die Satteldecke räumlich etwa die Form einer halben Birne aufweist und flexibel ausgebildet ist.

Die Gasfüllung im Zwischenraum zwischen der Satteldecke und der Bodenplatte und die flexible Eigenschaft der Satteldecke selbst schafft eine wesentliche Vorraussetzung für ein verbessertes Sitzen auf einem solchen Sattel. Das relativ große Gasvolumen im Zwischenraum zwischen der Satteldecke und der Bodenplatte und die Zusammenpressbarkeit des Gases bewirken eine optimale Federung. Ein "Durchsitzen" wird durch die Flexibilität der Satteldecke und durch das große Gasvolumen verhindert.

In erfinderischer Ausgestaltung kann die Bodenplatte einstückig ausgebildet sein und am umlaufenden Rand eine Steckverbindung zur Befestigung der Satteldecke aufweisen. Ebenso können die Bodenplatte und die Satteldecke sowie die Steckverbindung für die Befestigung der Satteldecke in der Bodenplatte gasdicht ausgebildet sein, wobei in der Bodenplatte ein Gasventil angeordnet sein kann.

Durch diese Ausgestaltung wird auf eine einfache Weise
ein Raum zur Aufnahme des Gases geschaffen, der in sich
gasdicht abgeschlossen ist. Über das Gasventil in der
Bodenplatte kann die Gasmenge und damit der Gasdruck
eingestellt werden. Das verwendete Gas kann insbesondere
Luft sein; ebenso kann als Gasventil ein ganz gewöhnliches
Fahrradschlauch - Ventil verwendet werden.

In weiterer erfinderischer Ausgestaltung kann zwischen der
Bodenplatte und der Satteldecke ein Hüllenboden angeordnet
sein. Der Hüllenboden ist einerseits fest mit der Satteldecke verbunden und andererseits über die Bodenplatte
gespannt und so     gehalten.

Der untere Abschluß der Satteldecke durch den Hüllenboden
fixiert den Sitz der Satteldecke auf der Bodenplatte in
sehr einfacher und vorteilhafter Weise.

In ebenso erfinderischer wie vorteilhafter Weiterbildung
kann die Bodenplatte und die Satteldecke aus einem Guss
sein. Dabei kann die Bodenplatte zwischen ihrem hinteren
und ihrem vorderen Bereich eine flächige Aussparung aufweisen. Des weiteren kann ein Metallrahmen, der sich vom
hinteren zum vorderen Bereich der Bodenplatte erstreckt,
so in der Bodenplatte verankert sein, daß der Metallrahmen
im hinteren und vorderen Bereich in der Bodenplatte eingegossen ist, wobei innerhalb der Aussparung der Metallrahmen
selbst frei zugänglich und außerhalb der Bodenplatte angeordnet ist.

Diese Variante in der Ausgestaltung der Erfindung stellt
eine besonders rationelle und kostengünstige Herstellung
eines Sattels dar. Die Bodenplatte und die Satteldecke
sind aus einem Guß hergestellt. In die Bodenplatte ist
der Metallrahmen eingegossen.

Der Metallrahmen liegt im Bereich der Aussparung frei. Dort **0180862**
kann der Sattel am Fahrrad befestigt werden.

In vorteilhafter Weiterbildung kann sowohl die Satteldecke, als auch der Hüllenboden aus Zuschnitten zusammengesetzt sein und mit einer gasdichten Innenauskleidung
versehen werden.

Die Satteldecke,die aus Zuschnitten zusammengesetzt ist,
unterstützt die Formstabilität      in ganz besonderem
Maße. Gleiches gilt auch für den Hüllenboden.

In Weiterbildung der Erfindung kann im Zwischenraum eine
gasdichte Blase angeordnet sein, wobei die gasdichte Blase
ein Gasventil aufweist. Zur Unterbringung der Blase kann dazu
in der Satteldecke eine verschließbare Öffnung angeordnet
sein.

In Fällen ohne großen Kapitaleinsatz in die Produktionsmittel
ist es nicht erforderlich Bodenplatte, Satteldecke und Hüllenbodengasdicht auszubilden,sondern die Gasfüllung wird in eine
gasdichte Blase, die im Zwischenraum angeordnet ist,eingebracht.
Auch kann eine beschädigte Satteldecke durch das Einbringen einer solchen Blase wieder verwendbar gemacht werden.
Bei der Ausführung Satteldecke mit Hüllenboden wird die Blase
fest umschlossen. Dadurch wird die Blase fixiert.Durch die
feste Verbindung der Satteldecke mit der Bodenplatte ist auch
die Fixierung der Satteldecke gewährleistet.

Die halbröhrenförmige Wölbung der Satteldecke in Querrichtung,also von der einen zur gegenüberliegenden Längskante
der Bodenplatte und die Verjüngung in halbbirnenförmiger
Form in der Längsrichtung der Satteldecke und unter Verwendung von flexiblem Material als Satteldecke gewährleistet
ein sicheres und nicht schwimmendes Sitzen auf dem Sattel.

Die Formbeständigkeit wird einerseits durch das flexible
und nicht elastische Satteldeckenmaterial und andererseits
durch die halbröhrenförmige Wölbung der Satteldecke über
der Bodenplatte erreicht. Die halbröhrenförmige Ausführung
hat nämlich zur Konsequenz, daß an allen Stellen der linken
und der rechten Längskanten der Bodenplatte die Satteldecke
senkrecht an der Bodenplatte anliegt und nicht in einem
spitzen Winkel. Das bedeutet, daß der radiale Abstand
der Satteldecke zum jeweiligen Mittelpunkt auf der horizontalen Längsachse der Bodenplatte gleich groß ist.

Die flexible,aber nicht elastische Satteldecke begrenzt deren
Ausdehnung und auch die der Blase und bestimmt durch
den festen Verbund mit der Bodenplatte die Form des Sattels.
Weiterhin fixiert der untere Abschluß von Satteldecke und
Hüllenboden den Sitz und die Lage der Blase. Das große
Luftvolumen des Sattels und die Schnittführung der flexiblen Zuschnitteile und die in etwa halbbirnenförmige Ausbildung der Satteldecke gewährleisten eine optimale Anpassung des Sattels an den menschlichen Körper. Durch
Großvolumigkeit und geringen Luftdruck wird Hängemattenfunktion erreicht. Der Gasdruck wird über das Gasventil
reguliert. Durch die Ausgestaltung des erfindungsgemäßen
Sattels ist es möglich, die Sitzhärte des Sattels individuell und stufenlos einzustellen, so daß keine Druck -
und Scheuerstellen beim Fahrer entstehen. Der Sattel bleibt
formbeständig, er gewährleistet ein sicheres und nicht
schwimmendes Sitzen.

Selbstverständlich erhält die Satteldecke ihre eigentliche
Halbbirnenform erst durch die Luftfüllung des Zwischenraums
zwischen der Bodenplatte und der Satteldecke mit Luft oder
sonstigem Gas. Die wichtige Formbeständigkeit und Stabilität der Satteldecke ist dabei insgesamt abhängig von der Form
der Satteldecke, die ähnlich einer halben Birne ist, sowie
der halbröhrenförmigen Wölbung der Satteldecke über der
Bodenplatte in deren Längsrichtung, woraus der wichtige
eigentliche radiale Abstand der Satteldecke zum jeweiligen
Mittelpunkt der horizontalen Längsachse der Bodenplatte
gegeben ist und woraus auch das rechtwinklige Anliegen der
Satteldecke entlang der Bodenplatte - Längskanten resultiert.
Weiterhin ist für die Formbeständigkeit noch wichtig, daß
das Satteldeckenmaterial nicht elastisch sondern nur in
sich beweglich, also flexibel ist und daß die Satteldecke
aus Zuschnitten zusammengesetzt sein kann.

Vorteilhafte Weiterbildungen und erfinderische Ausgestaltung
ergeben sich aus dem im folgenden, anhand der Zeichnung
prinzipmäßig dargestellten Ausführungsbeispiel.

Es zeigen:

Figur 1: einen erfindungsgemäßen Sattel mit am Bodenteil
eingesteckter Satteldecke in Seitenansicht
im Schnitt;

Figur 2: eine Seitenansicht eines Sattels bei dem die
Satteldecke und der Hüllenboden als eine Einheit
über die Bodenplatte gespannt ist;

Figur 3: eine Ansicht des Sattels nach Figur 2 von hinten
betrachtet im Schnitt;

Figur 4: ein Schnittbild eines Sattels bei dem die Bodenplatte und die Satteldecke aus einem Guß hergestellt sind, in Seitenansicht;

Figur 5: eine Draufsicht auf den Sattelboden des Sattels
gemäß Figur 4;

Figur 6: eine Ansicht des Sattels von hinten betrachtet
mit verschließbarer Öffnung.

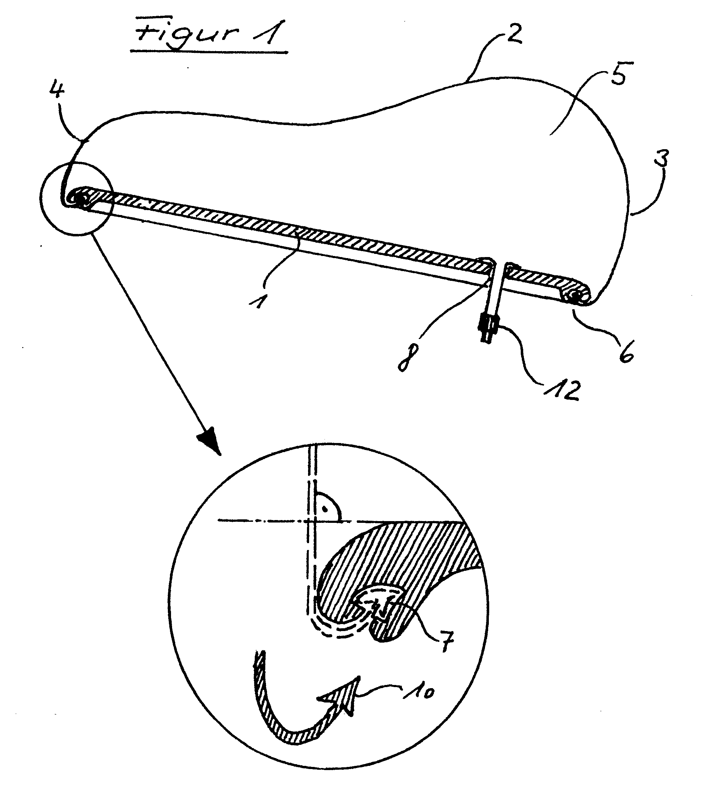

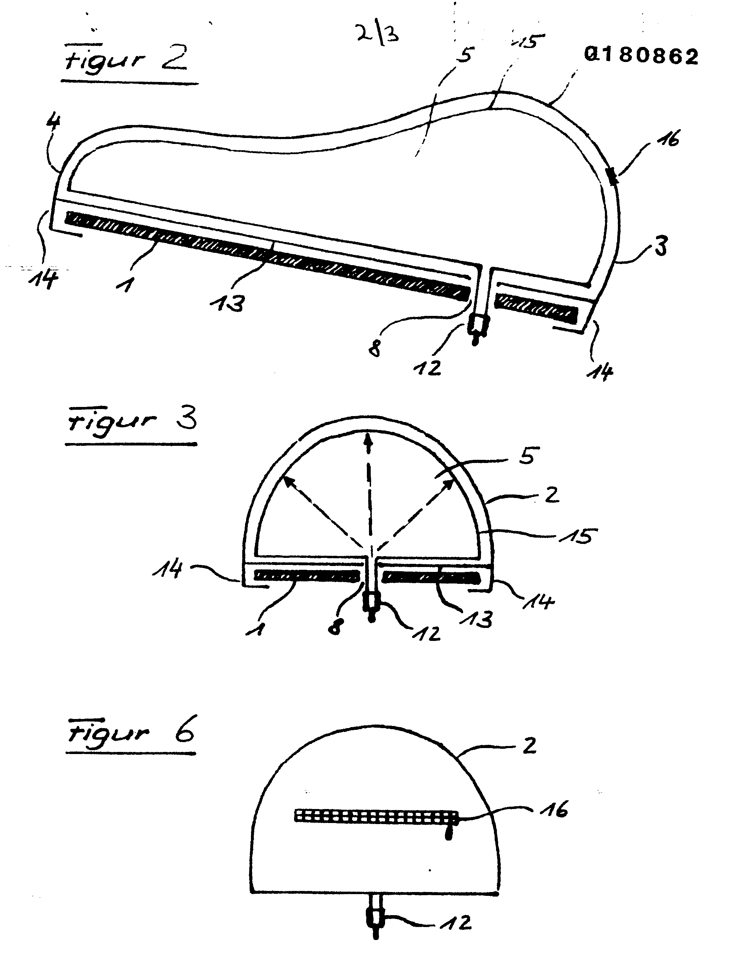

Ein erfindungsgemäßer Sattel gemäß Figur 1 besteht aus
einer im wesentlichen ebenen Bodenplatte 1, die in ihrer
Fläche länglich bis birnenförmig ausgebildet ist (Figur 5).
Auf der Bodenplatte 1 ist eine Satteldecke 2 angeordnet.
Die Satteldecke 2 ist im wesentlichen halbröhrenförmig
von der einen Längskante zur gegenüberliegenden Längskante der Bodenplatte 1 über diese gewölbt und bildet
dadurch einen Zwischenraum 5 zwischen der Bodenplatte 1
und der Satteldecke 2. Die Satteldecke 2 verjüngt sich entsprechend der Form der Bodenplatte 1 vom hinteren Bereich 3
zum vorderen Bereich 4        in an sich bekannter
Weise annähernd halbbirnenförmig. Ein Zwischenraum 5
zwischen der Bodenplatte 1 und der Satteldecke 2 ist mit
Gas,insbesondere Druckluft gefüllt. Durch die halbröhrenförmige Wölbung der Satteldecke 2 über der Bodenplatte 1
liegt die Satteldecke am umlaufenden Rand der Bodenplatte 1
senkrecht an. Die Bodenplatte 1 hat im Bereich ihrer
Außenkante 6 eine Aussparung 7, die als Steckverbindung
ausgebildet ist. In diese Aussparung 7 wird eine am Rand
der Satteldecke 2 angeordnete Verdickung 10 eingesteckt.
In der Bodenplatte 1,die gemäß Figur 1 und Figur 2 einstückig ausgebildet sein kann , ist eine Bohrung 8 angeordnet, durch die ein Gasventil 12 gesteckt ist, das in
selbstdichtender Ausführung ausgestaltet ist und die Verbindung zum Zwischenraum 5 herstellt.

In der Figur 2 ist ein Sattel dargestellt bei dem die Satteldecke 2 und ein Hüllenboden 13 eine Einheit bilden,
wobei dei Satteldecke 2 mittels einer an ihrem Außenrand
umlaufenden Hülleneinfassung 14 über die

Bodenplatte 1 gespannt gehalten wird. Die Satteldecke 2 ist im wesentlichen wie die Außenhaut einer halben Birne ausgebildet und erstreckt sich von einer Längskante zur gegenüberliegenden Längskante der Bodenplatte 1, wobei sie sich entsprechend der Fläche der Bodenplatte 1 räumlich vom Bereich des hinteren Endes 3 in Richtung des Bereichs des vorderen Endes 4 halbbirnenförmig verjüngt. Die Satteldecke 2 ist über der Bodenplatte 1 durch einen flexiblen Hüllenboden 13 zu einer Hülle 2,13 ausgebildet, wobei die Hülle 2,13 den Zwischenraum 5 eingrenzt.

Sowohl die Satteldecke 2 als auch der Hüllenboden 13 können aus flexiblen Zuschnitten zusammengesetzt sein und mit einer gasdichten Innenauskleidung versehen sein. Im Falle, daß die Satteldeckeninnenwand und auch die Hüllenbodeninnenwand nicht mit einer gasdichten Innenauskleidung versehen sind, muß in den Zwischenraum eine gasdichte Blase 15 über eine verschließbare Öffnung 16 eingebracht werden, wie in Figur 2 dargestellt. Die verschließbare Öffnung kann von einem Reiß- oder Klettverschluß oder durch eine Überlappung in der Satteldecke gebildet sein.        Je nach Ausgestaltung des Zwischenraumes 5, entweder mit einer gasdichten Innenauskleidung oder bei Anordnung einer gasdichten Blase 15 ist in der Bodenplatte 1, dem Hüllenboden 13 und/oder in der gasdichten Blase 15 ein Gasventil 12 angeordnet.

Figur 3 zeigt eine Ansicht des Sattels nach Figur 2 von hinten betrachtet. Die Formbeständigkeit     der Satteldecke 2 ist                 abhängig von der Form der Satteldecke 2, die ähnlich einer halben Birne ist, sowie der halbröhrenförmigen Wölbung der Satteldecke 2 über der Bodenplatte 1 in deren Längsrichtung, woraus der wichtige gleiche radiale Abstand der Satteldecke 2 zum jeweiligen Mittelpunkt der horizontalen Längsachse der Bodenplatte 1 gegeben ist und woraus auch das rechtwinklige Anliegen der Satteldecke 1 entlang der Bodenplatte - Längskanten bzw. der Außenkate 6 resultiert. Weiterhin ist für die Formbeständigkeit noch wichtig, daß das Satteldeckenmaterial nicht elastisch, sondern nur in sich beweglich, also flexibel ist.

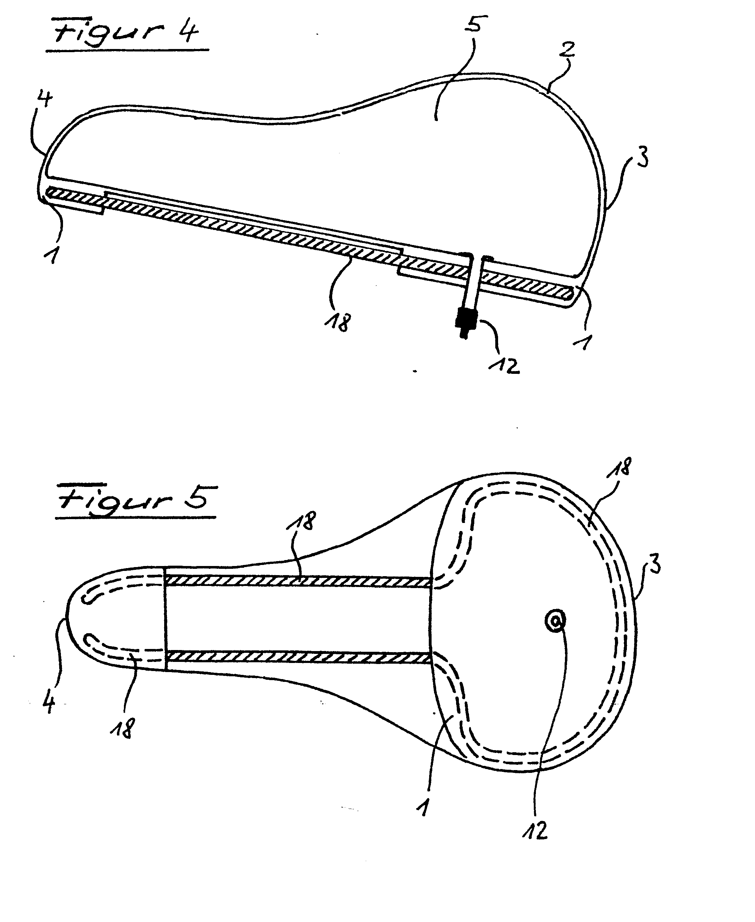

Figur 4 und Figur 5 zeigen einen Sattel, bei dem die Bodenplatte 1 und die Satteldecke 2 aus einem Guß hergestellt sind. Die Bodenplatte 1 weist zwischen ihrem hinteren Bereich 3 und ihrem vorderen Bereich 4 eine flächige Aussparung 17 auf. Ein Metallrahmen 18, der sich vom hinteren Bereich der Bodenplatte 3 zum vorderen Bereich der Bodenplatte 4 erstreckt, ist in der Bodenplatte 1 so verankert, daß der Metallrahmen 18 im hinteren und im vorderen Bereich in die Bodenplatte 1 eingegossen ist. Im Bereich des freiliegenden Metallrahmens 18 kann der Sattel an dem Fahrrad befestigt werden.

Durch das Gasventil 12 wird das Gas, insbesondere Luft in den Zwischenraum 5 gepreßt. Das Gasventil 12 ist vorzugsweise ein Fahrradventil, so daß das Einpressen von Luft einfach durch eine Fahrradpumpe bewerkstelligt werden kann. Durch das Einpressen von Luft bläst sich die Satteldecke 2 auf. Nach ausreichendem Aufpumpen erfolgt die stufenlose Einstellung der Sitzhärte dadurch, daß sich der Fahrer auf den Sattel setzt und mit einer Hand am Gasventil 12 so lange Luft entweichen läßt, bis die Sitzhärte für ihn passend ist.

0180862

Anmelder:

Dieter Reusing
Gmünder Straße 6

7072 Heubach

Heubach, den 23.1o.1985

A 84117

P A T E N T A N S P R Ü C H E
=================================

1. Sattel, insbesondere für Zweiräder, wie z.B. Fahrräder,
   Mopeds, Motorräder usw.
   d a d u r c h   g e k e n n z e i c h n e t , daß
   auf einer im wesentlichen ebenen Bodenplatte (1),
   die in ihrer Fläche länglich bis birnenförmig ausgebildet ist, eine Satteldecke (2) angeordnet ist,
   wobei die Satteldecke (2) im wesentlichen halbröhrenförmig von der einen Längskante zur gegenüberliegenden
   Längskante über die Bodenplatte (1) gewölbt ist und
   dadurch einen Zwischenraum (5) zwischen der Bodenplatte (1) und der Satteldecke (2) bildet und wobei
   sich die Satteldecke (2) entsprechend der Form der
   Bodenplatte (1) vom hinteren Bereich (3) zum vorderen
   Bereich (4) des Sattels in an sich bekannter Weise
   annähernd halbbirnenförmig verjüngt und wobei der
   Zwischenraum (5) eine Gasfüllung aufweist und wobei
   die Satteldecke (2) räumlich etwa die Form einer halben Birne aufweist und flexibel ausgebildet ist.

2. Sattel nach Anspruch 1

d a d u r c h   g e k e n n z e i c h n e t , daß
die Bodenplatte (1) einstückig ausgebildet ist und
an der Außenkante eines umlaufenden Randes(6) eine
Steckverbindung (7,10) zur Befestigung der Satteldecke (2)
aufweist.

3. Sattel nach Anspruch 1 oder 2

d a d u r c h   g e k e n n z e i c h n e t , daß
zwischen der Bodenplatte (1) und der Satteldecke (2)
ein Hüllenboden (13) angeordnet ist, wobei der Hüllenboden (13) einerseits fest mit der Satteldecke (2) verbunden ist und wobei andererseits der Hüllenboden (13)
über die Bodenplatte (1) gespannt gehalten ist.

4. Sattel nach einem der Ansprüche 1 - 3

d a d u r c h   g e k e n n z e i c h n e t , daß
die Bodenplatte (1) und die Satteldecke (2) aus einem
Guß sind, wobei die Bodenplatte (1) zwischen ihrem
hinteren und ihrem vorderen Bereich (3,4) eine flächige
Aussparung (17) aufweist und wobei ein Metallrahmen (18),
der sich vom hinteren zum vorderen Bereich (3,4) der
Bodenplatte (1) erstreckt, so in der Bodenplatte (1)
verankert ist, daß der Metallrahmen (18) im hinteren
und im vorderen Bereich in die Bodenplatte (1) eingegossen ist und wobei innerhalb der Aussparung (17)
der Metallrahmen (18) frei zugänglich außerhalb der
Bodenplatte (1) angeordnet ist.

5. Sattel nach einem der Ansprüche 1 oder 3

d a d u r c h   g e k e n n z e i c h n e t , daß
sowohl die Satteldecke (2) als auch der Hüllenboden (13)
aus Zuschnitten zusammengesetzt sind und mit einer gasdichten Innenauskleidung versehen sind.

**0180862**

6. Sattel nach einem der Ansprüche 1 - 5
   d a d u r c h   g e k e n n z e i c h n e t , daß
   die Bodenplatte (1) und die Satteldecke (2), sowie
   die Steckverbindung (7,10) gasdicht ausgebildet sind.

7. Sattel nach einem der Ansprüche 1 - 6
   d a d u r c h   g e k e n n z e i c h n e t , daß
   im Zwischenraum (5) eine gasdichte Blase (15) angeordnet ist.

8. Sattel nach einem der Ansprüche 1 - 7
   d a d u r c h   g e k e n n z e i c h n e t , daß
   in der Satteldecke (2) eine verschließbare Öffnung (16)
   angeordnet ist.

9. Sattel nach einem der Ansprüche 1 - 8
   d a d u r c h   g e k e n   n z e i c h n e t , daß
   in der Bodenplatte (1), dem Hüllenboden (13) und/oder
   in der gasdichten Blase (15) ein Gasventil (12) angeordnet
   ist.

Figur 1

Ø180862

figur 2

figur 3

figur 6

_Figur 4_

5

2

4

3

1

18

12

1

_Figur 5_

18

18

18

4

18

3

1

12

Europäisches
Patentamt

**EUROPÄISCHER RECHERCHENBERICHT**

**0180862**
Nummer der Anmeldung

EP 85 11 3514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | | | B 62 J 1/26 |
| X | FR-A-2 357 417 (R. SIMON) <br><br> * Figuren 4-7; Patentansprüche 1-3,6 * | 1-3,6, 9 | B 62 J 1/00 |
| | --- | | |
| X | CH-A- 264 172 (W. DREIER) <br><br> * Insgesamt * | 1,2,6, 7,9 | |
| | --- | | |
| X | FR-A- 481 673 (E. MARIANI) <br> * Insgesamt * | 1,7-9 | |
| | --- | | |
| X | GB-A- 681 291 (ATTENBOROUGH BROTHERS LTD.) <br> * Seite 1, Zeilen 74-79; Figuren * | 1,7,8 | |
| | | | RECHERCHIERTE SACHGEBIETE (Int Cl 4) |
| X | FR-A-2 445 263 (A. BUONAMASSA) <br> * Figuren; Patentansprüche 1-4 * | 1,4 | B 62 J |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 17-01-1986 | FRANKS B.G. |